# EUROPEAN PATENT SPECIFICATION

(11) **EP 2 050 789 B1**
(45) Date of publication and mention of the grant of the patent: **19.06.2013**
(21) Application number: 07790648.5
(22) Date of filing: 11.07.2007
(51) Int. Cl.: C08G 63/60, C08K 5/00, C08L 67/04, C08G 63/06

(54) **POLYLACTIC ACID RESIN COMPOSITION, MOLDED BODY THEREOF AND POLYLACTIC ACID COMPOUND**
POLYMILCHSÄUREHARZZUSAMMENSETZUNG, FORMKÖRPER DARAUS UND POLYMILCHSÄUREVERBINDUNG
COMPOSITION DE RÉSINE D'ACIDE POLYLACTIQUE, CORPS MOULÉ ASSOCIÉ ET COMPOSÉ D'ACIDE POLYLACTIQUE

(30) Priority: 26.07.2006 JP 2006203876
(43) Date of publication of application: 22.04.2009
(73) Proprietor: Mitsui Chemicals, Inc., Tokyo 105-7117 (JP)
(72) Inventor: URAKAMI, Tatsuhiro, Sodegaura-shi, Chiba 2990265 (JP); HIGUCHI, Choujirou, Sodegaura-shi, Chiba 2990265 (JP)
(74) Representative: HOFFMANN EITLE
(86) International application number: PCT/JP2007/063844
(87) International publication number: WO 2008/013059

(56) References cited:
- EP-A1- 0 618 250
- EP-A1- 0 669 358
- EP-A1- 0 780 428
- JP-A- 08 199 054
- JP-A- 09 158 021
- JP-A- 10 182 801
- JP-A- 2000 344 877
- JP-A- 2006 016 605
- JP-A- 2006 335 904
- JP-A- 2007 016 091
- JP-A- 2007 091 769
- US-A1- 2005 001 349
- US-A1- 2006 030 690
- DATABASE WPI Week 199828 Thomson Scientific, London, GB; AN 1998-315272 XP002605892, & JP 9 176295 A (MITSUI TOATSU CHEM INC) 8 July 1997 (1997-07-08)

## Description

### TECHNICAL FIELD

The present invention relates to a polylactic acid resin composition which is increased in transparency, rate of crystallization and heat resistance and a molded article comprising the composition. Further, the present invention also relates to a novel polylactic acid compound used in the composition.

### BACKGROUND ART

With increasing awareness of global environment issues, the depletion of fossil materials and oil resources and the increase in carbon dioxide have posed a problem. For this reason, the research and development of a biodegradable resin such as an aliphatic polyester and the like and a resin synthesized by using plants as raw materials have been actively conducted. Among the aliphatic polyesters, a polylactic acid having excellent moldability has especially attracted attention as a resin derived from plant origin which is produced from lactic acid obtained by fermentation of grain resources such as corn and the like.

However, since polylactic acid has a drawback of being rigid and brittle as well as has a slow rate of crystallization and low heat resistance, the use expansion is limited. Particularly, in the case of a polylactic acid amorphous molding article, because it has a softening point of less than 60°C, a problem easily causing whitening, deformation and the like in daily use environments was pointed out.

In addition, if attempts are made to improve the heat resistance of polylactic acid by increasing the crystallinity by heat-treating (annealing), crystals (for example, spherocrystals) having sizes almost equal to or larger than the wavelength of light, which cause scattering of light, generally grow rapidly, and the molded article becomes opaque.

In order to solve these problems, a lot of attempts have been made to improve heat resistance and transparency by adding various additives to polylactic acid.
In patent document 1, it is described that the addition of a phosphate ester metal salt, hydrous magnesium silicate and the like as a nucleating agent is effective. However, when such a nucleating agent is used, polylactic acid has a drawback in that the transparency is impaired. In addition, talc commonly used is practically usable only from the viewpoint of the rate of crystallization. However, to achieve this, the addition amount of talc is often required to be 1% or more, and talc has a drawback of impairing transparency which is an inherent characteristic of polylactic acid.

In patent document 2, there is described a process of adding as a nucleating agent at least one kind of transparent nucleating agent selected from an aliphatic carboxylic acid amide, an aliphatic carboxylic acid salt, an aliphatic alcohol and an aliphatic carboxylic acid ester. However, in this case, the molded article had a crystallinity of 33% and a haze of 6.5%, and the result having both sufficient crystallinity and transparency was not obtained.

In patent document 3, there is described a process of using polylactic acid and an inorganic filler in which a compound having a specific functional group is used as an initiator. However, although the slip properties were improved by this process, the transparency was not maintained because an inorganic filler was added.
Patent document 1: Japanese Patent Laid-Open Publication No. 192884/2003
Patent document 2: Japanese Patent Laid-Open Publication No. 278991/1997(H09)
Patent document 3: Japanese Patent Laid-Open Publication No. 285121/2004
EP-A1-0 780 428 provides an aliphatic polyester formed item having transparency and crystallinity and describes a heat-treatment of an aliphatic polyester composition comprising an aliphatic polyester and one or more transparent nucleating agents selected from the group consisting of an aliphatic carboxylic acid amide, an aliphatic carboxylic acid salt, an aliphatic alcohol and an aliphatic acid ester having a melting point of 40-300 °C.

### DISCLOSURE OF THE INVENTION

### PROBLEM TO BE SOLVED BY THE INVENTION

An object of the present invention is to provide a resin composition having increased heat resistance (high crystallinity) and transparency without impairing rigidity which a polylactic acid resin inherently has, a molded article composed of the resin composition, and a novel polylactic acid compound used in the resin composition.

### MEANS FOR SOLVING THE PROBLEMS

The present inventors have conducted earnest studies to solve the problems and as a result, have found that the problems may be solved by using a polylactic acid compound having a specific moiety.

That is, the polylactic acid resin composition of the present invention contains a linear polylactic acid compound (A) having a moiety represented by the following formula (1) and having a weight average molecular weight (Mw) of 5,000 to 500, 000 (provided that when R₁ is a group composed of dicarboxylic acid and a diol, the weight ratio of a moiety represented by -CH(CH₃)C(O)O- derived from lactic acid to a moiety represented by the formula (1) is in the range of 99.9/0.1 to 90.1/9.9 and R₁ has a weight average molecular weight of less than 10,000).

-X₁-R₁-X₂- (1)

In the formula (1), X₁ and X₂ each independently represent an oxygen atom, a sulfur atom or an NH group; and R₁ represents a divalent hydrocarbon group containing at least one aromatic ring or aliphatic ring, and the hydrocarbon group may contain an oxygen atom, a nitrogen atom.

The polylactic acid resin composition of the present invention may further contain 5 to 1,900 parts by weight of a polylactic acid compound (B) having a moiety represented by the following formula (7) and having a weight average molecular weight (Mw) of 5,000 to 500,000, based on 100 parts by weight of the linear polylactic acid compound (A).

-X₃-R₂-X₄- (7)

In the formula (7), X₃ and X₄ each independently represent an oxygen atom, a sulfur atom or an NH group; and R₂ represents an aliphatic hydrocarbon group having a molecular weight of 50 to 50,000 and containing no ring structure, and the aliphatic hydrocarbon group may contain an oxygen atom, a nitrogen atom or a sulfur atom.

The polylactic acid resin composition of the present invention may further contain 5 to 500 parts by weight of a lactic acid resin (D) other than the linear only lactic acid compound (A) and the polylactic acid compound (B), based on 100 parts by weight of the linear polylactic acid compound (A)

The polylactic acid resin composition of the present invention may further contain 0.1 to 10 parts by weight of at least one kind of a transparent nucleating agent (C) selected from carboxylic acid amides, aliphatic alcohols and aliphatic carboxylic acid esters, based on 100 parts by weight of the linear polylactic acid compound (A) or 100 parts by weight of the total of the linear polylactic acid compound (A) and the polylactic acid compound (B) and/or a lactic acid compound (D) which are used when necessary.

In the polylactic acid resin composition of the present invention, when the composition is melted at 220°C for 3 minutes and then cooled to 100°C at a cooling rate of 99°C/min and maintained at 100°C, the isothermal crystallization time is preferably 5 minutes or less.

The moiety represented by the formula (1) is preferably a segment derived from at least one kind selected from aliphatic ring-containing diols and aromatic ring-containing diols.

The moiety represented by the formula (7) is preferably a segment derived from at least one kind selected from alkylene glycols, polyesters whose both terminals are hydroxyl groups and polycarbonates whose both terminals are hydroxyl groups.

The transparent nucleating agent (C) preferably is a carboxylic acid amide, and the carboxylic acid amide is further preferably at least one kind selected from the group consisting of lauric acid amide, palmitic acid amide, stearic acid amide, erucic acid amide, behenic acid amide, ricinoleic acid amide, hydroxystearic acid amide, N-oleylpalmitic acid amide, N-stearylerucic acid amide, ethylene biscapric acid amide, ethylene bislauric acid amide, ethylene bisstearic acid amide, ethylene bisoleic acid amide, ethylene bis-12-hydroxystearic acid amide, hexamethylene biscapric acid amide, hexamethylene bislauric acid amide, hexamethylene bisstearic acid amide, hexamethylene bisoleic acid amide, hexamethylene bis-12-hydroxystearic acid amide, m-xylylene biscapric acid amide, m-xylylene bislauric acid amide, m-xylylene bisstearic acid amide, m-xylylene bisoleic acid amide and m-xylylene bis-12-hydroxystearic acid amide.

The lactic acid resin (D) is preferably a polylactic acid other than the linear polylactic acid compound (A) and the polylactic acid compound (B)

A molded article of the present invention is composed of the polylactic acid resin composition of the present invention, has a haze of 0.1 to 15% as measured at a thickness of 100 µm and has a crystallinity of 35% or more.

The linear polylactic acid compound of the present invention has a moiety represented by the following formula (1) and having a weight average molecular weight (Mw) of 5,000 to 500, 000 (provided that when R₁ is a group composed of dicarboxylic acid and a diol, the weight ratio of a moiety represented by -CH(CH₃)C(O)O- derived from lactic acid to a moiety represented by the formula (1) is in the range of 99.9/0.1 to 90.1/9.9, and R₁ has a weight average molecular weight of less than 10000).

-X₁R₁X₂- (1)

In the formula (1), X₁ and X₂ each independently represent an oxygen atom, a sulfur atom or an NH group; and R₁ represents a divalent hydrocarbon group containing at least one aromatic ring or aliphatic ring, and the hydrocarbon group may contain an oxygen atom, a nitrogen atom.

### EFFECT OF THE INVENTION

Since the rate of crystallization and transparency are increased according to the present invention, the present invention may be applied to a product which requires the molding cycle shortening, heat resistance and transparency which are conventionally difficult to be obtained and may give a contribution to the use expansion of green plastics represented by a polylactic acid resin.

### BEST MODE FOR CARRYING OUT THE INVENTION

Hereinafter, there will be explained in detail a polylactic acid resin composition of the present invention, a molded article thereof and a linear polylactic acid compound. First, there will be explained each component which can be used in the polylactic acid resin composition of the present invention.

### <Linear Polylactic Acid Compound (A)>

The linear polylactic acid compound (A) of the present invention is a polymer which has a moiety (hereinafter also referred to as a "hard segment") represented by the following formula (1) in a polymer chain of the lactic acid resin (D) described later, has a weight average molecular weight (Mw) of 5,000 to 500,000 and is used as an essential component of the polylactic acid resin composition of the present invention. However, when R₁ of the following formula (1) is a group composed of dicarboxylic acid and a diol, the weight ratio [lactic acid moiety/hard segment] of a moiety represented by -CH(CH₃)C(O)O-derived from lactic acid (hereinafter also referred to as a "lactic acid moiety") to a moiety represented by the formula (1) (hard segment) is in the range of 99.9/0.1 to 90.1/9.9 and R₁ has a weight average molecular weight of less than 10000.

-X₁-R₁-X₂- (1)

In the formula (1), X₁ and X₂ each independently represent an oxygen atom, a sulfur atom or an NH group, R₁ represents a divalent hydrocarbon group containing at least one aromatic group or aliphatic group, and the hydrocarbon group may contain an oxygen atom, a nitrogen atom. In addition, when the R₁ is a group other than a group composed of dicarboxylic acid and a diol, the number of carbon atoms in R₁ is preferably 5 to 50.

As described above, the "hard segment" in the present invention is an aliphatic hydrocarbon group containing a ring structure such as an aliphatic ring, an aromatic ring or the like (provided that it may contain an atom such as oxygen or nitrogen) and is a segment derived from a compound containing two or more functional groups derived from a hydroxyl group, a thiol group or an amino group.

As the linear polylactic acid compound (A) of the present invention, the following linear polylactic acid compounds (A1) to (A5) are preferred.

[1] Linear polylactic acid compound (A1) in which a moiety represented by the formula (1) is represented by the following formula (2)

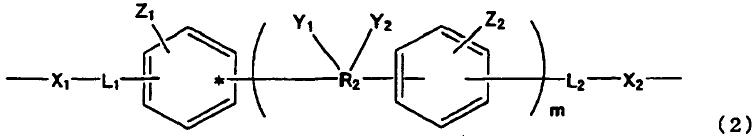

In the formula (2), X₁ and X₂ each independently represent an oxygen atom, a sulfur atom or an NH group, R₂ represents a single bond or a hydrocarbon group having 1 to 10 carbon atoms, and the hydrocarbon group may be any of linear, branched and cyclic. Y₁ and Y₂ each independently represent a saturated hydrocarbon group having 1 to 10 carbon atoms, an aryl group having 6 to 10 carbon atoms or a hydrogen atom and are not present when R₂ is a single bond. L₁ and L₂ each independently represent an alkylene group having 1 to 8 carbon atoms or an oxyalkylene group having 1 to 8 carbon atoms. Z₁ and Z₂ each independently represent a hydrocarbon group having 1 to 10 carbon atoms or a hydrogen atom. Y₁ and Y₂, Y₁ and Z₁, and Y₂ and Z₂ may be mutually bonded to form a ring. m is an integer of 0 to 5.

[2] Linear polylactic acid compound (A2) in which a moiety represented by the formula (1) is represented by the following formula (3) and the weight ratio [lactic acid moiety/moiety represented by the formula (3)] of the moiety represented by -CH(CH₃)C(O)O- derived from lactic acid to the moiety represented by the formula (3) is in the range of 99.7/0.3 to 90.5/9.5

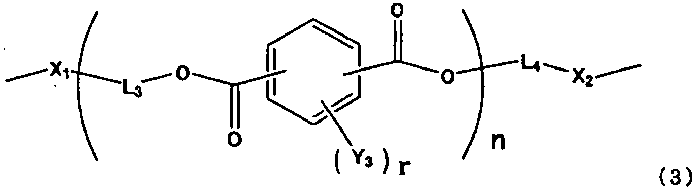

In the formula (3), X₁ and X₂ each independently represent an oxygen atom, a sulfur atom or an NH group, Y₃ represents a hydrogen atom, a saturated hydrocarbon group having 1 to 8 carbon atoms, an aryl group having 6 to 8 carbon atoms or an aralkyl group having 7 to 8 carbon atoms, and the saturated hydrocarbon group may be any of linear, branched and cyclic. r is an integer of 0 to 4. L₃ and L₄ each independently represent an alkylene group having 2 to 8 carbon atoms or a cycloalkylene group having 3 to 8 carbon atoms. n is an integer of 1 to 100.

[3] Linear polylactic acid compound (A3) in which a moiety represented by the formula (1) is represented by the following formula (4)

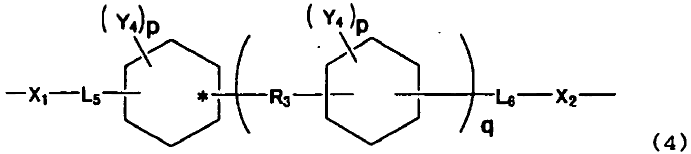

In the formula (4), X₁ and X₂ each independently represent an oxygen atom, a sulfur atom or an NH group, Y₄ represents a hydrogen atom or a hydrocarbon group having 1 to 8 carbon atoms, and the hydrocarbon group may be any of linear, branched and cyclic. R₃, L₅ and L₆ each independently represent a single bond or an alkylene group having 1 to 8 carbon atoms. p represents an integer of 0 to 4. q represents an integer of 0 to 5.

[4] Linear polylactic acid compound (A4) in which a moiety represented by the formula (1) is represented by the following formula (5)

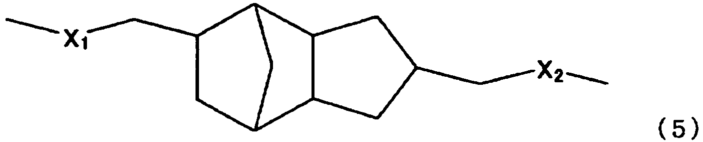

In the formula (5), X₁ and X₂ each independently represent an oxygen atom, a sulfur atom or an NH group.

[5] Linear polylactic acid compound (A5) in which a moiety represented by the formula (1) is represented by the following formula (6)

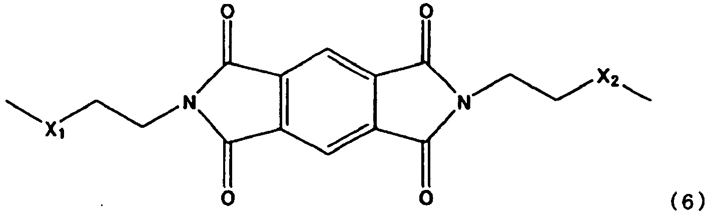

In the formula (6), X₁ and X₂ each independently represent an oxygen atom, a sulfur atom or an NH group.

In the following, the moieties represented by the formulas (2), (3), (4), (5) and (6) may be referred to as hard segments (2), (3), (4), (5) and (6), respectively.

The content of the hard segment in the linear polylactic acid compound (A) is not particularly limited, but is preferably 0.01 to 5 mol% and is more preferably 0.03 to 3 mol%. Additionally, in reality, it is desirable that the content of the hard segment is calculated from the targeted molecular weight or the amount for obtaining the targeted molecular weight is determined by actually performing the reaction.

The linear polylactic acid compound (A) can be obtained by a well-known and generally used method, and, for example, can be obtained by copolymerizing a compound having the hard segment with a monomer containing lactide or lactic acid as a main component. As another monomer other than the lactide and lactic acid, there may be used cyclic esters (lactones) such as caprolactone, propiolactone, butyrolactone and the like, and hydroxyalkanoic acids such as hydroxybutanoic acid, hydroxypropanoic acid and the like.

The compound having the hard segment (2) includes a compound having a hydroxyl group, a thiol group or an amino group, which is represented by the following formula (2a).

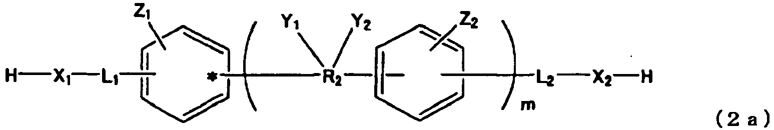

In the formula (2a), X₁, X₂, R₂, Y₁, Y₂, L₁, L₂, Z₁, Z₂ and m are the same meaning as X₁, X₂, R₂, Y₁, Y₂, L₁, L₂, Z₁, Z₂ and m in the formula (2).

In the formula (2a), X₁ and X₂ are preferably an oxygen atom or an NH group; L₁ and L₂ are preferably a methylene group, an oxymethylene group, an ethylene group, an oxyethylene group, a 1,2-propylene group, an oxy-1,2-propylene group, a trimethylene group, oxytrimethylene group, a 2, 3-butylene group, an oxy-2,3-butylene group, a tetramethylene group, an oxytetramethylene group, a cyclohexylene group and an oxycyclohexylene group; Z₁ and Z₂ are preferably a hydrogen atom, a methyl group, an ethyl group, an isopropyl group and a t-butyl group; Y₁ and Y₂ are preferably a hydrogen atom, a methyl group, an ethyl group, an isopropyl group, a phenyl group and a cyclohexyl group; R₂ is preferably a single bond, a methyl group, a methylene group and a methine group.

The compound having the hard segment (3) includes a compound having a hydroxyl group, a thiol group or an amino group, which is represented by the following formula (3a).

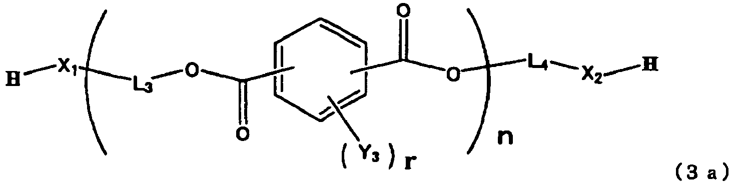

In the formula (3a), X₁, X₂, Y₃, L₃, L₄, r and n are the same meaning as X₁, X₂, Y₃, L₃, L₄, r and n in the formula (3).

In the formula (3a), X₁ and X₂ are preferably an oxygen atom or an NH group; L₃ and L₄ are preferably a methylene group, an ethylene group, an 1, 2-propylene group, a trimethylene group, a 2,3-butylene group, a tetramethylene group, a pentamethylene group, a hexamethylene group, a heptamethylene group, an octamethylene group and a cyclohexylene group; Y₃ is preferably a hydrogen atom, a methyl group, an ethyl group, an isopropyl group, a phenyl group, a benzyl group and a cyclohexyl group.

The compound having the hard segment (4) includes a compound having a hydroxyl group, a thiol group or an amino group, which is represented by the following formula (4a).

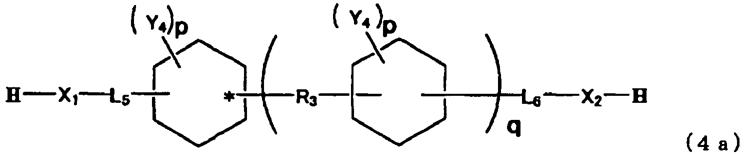

In the formula (4a), X₁, X₂, Y₄, R₃, L₅, L₆, p and q are the same meaning as X₁, X₂, Y₄, R₃, L₅, L₆, p and q in the formula (4).

In the formula (4a), X₁ and X₂ are preferably an oxygen atom or an NH group; L₅ and L₆ are preferably a single bond, a methylene group and an ethylene group; R₃ is preferably a single bond, a methylene group, an ethylene group and an isopropylidene group; Y₄ is preferably a hydrogen atom, a methyl group, an ethyl group, an isopropyl group and a cyclohexyl group.

The compound having the hard segment (5) includes a compound having a hydroxyl group, a thiol group or an amino group, which is represented by the following formula (5a).

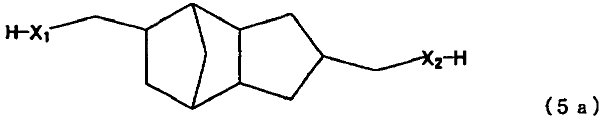

In the formula (5a), X₁ and X₂ each independently represent an oxygen atom, a sulfur atom or an NH group, and is preferably an oxygen atom or an NH group.

The compound having the hard segment (6) includes a compound having a hydroxyl group, a thiol group or an amino group, which is represented by the following formula (6a).

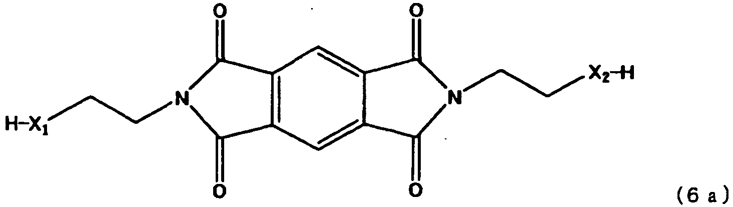

In the formula (6a), X₁ and X₂ each independently represent an oxygen atom, a sulfur atom or an NH group, and is preferably an oxygen atom or an NH group.

A preferred example of a compound having the hard segment includes aliphatic ring-containing diols, aromatic ring-containing diols.

The aliphatic ring-containing diols include, for example, 1,4-cyclohexanediol:

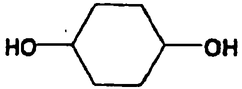

1,3-cyclohexanediol:

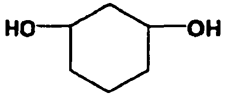

4,4'-bicyclohexanol:

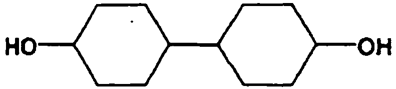

4,4'-isopropylidenedicyclohexanol(2,2-bis(4-hydroxycyclohex yl)propane):

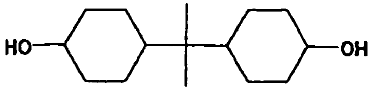

4,4'-methylenedicyclohexanol:

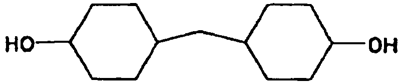

4,8-bis(hydroxymethyl)tricyclo(5.2.1.0 2,6)decane:

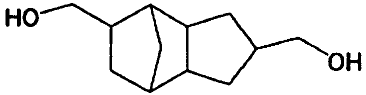

and the like.

In addition, the aromatic ring-containing diols include, for example,
4,4'-xylyleneglycol:

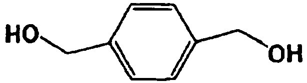

4,4'-biphenyleneglycol:

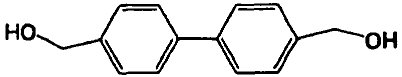

6,6'-bis(2-hydroxyethoxy)-3,3,3',3'-tetramethyl-1,1-spirobi indane:

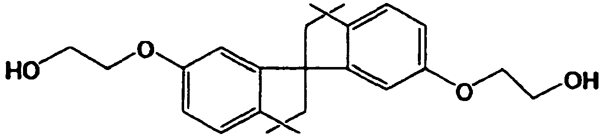

4,4'-(fluoronylidene)bis(2-phenoxyethanol):

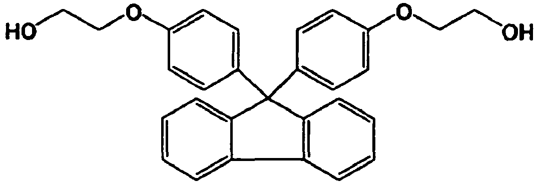

N,N'-bis(2-hydroxyethyl)-pyromellitimide:

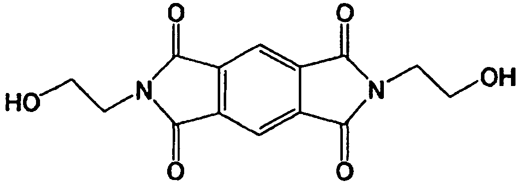

2,2-bis(4-(2-hydroxyethoxy)phenyl)propane:

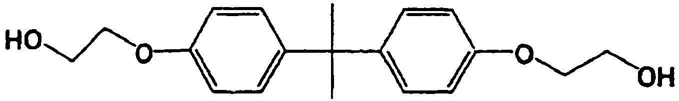

In addition, a compound having the hard segment includes polyesters having hydroxyl groups at the both terminals thereof obtained by the polycondensation of an aromatic dicarboxylic acid, esters of an aromatic dicarboxylic acid or acid halides of an aromatic dicarboxylic acid with an alkylene diol having 2 to 8 carbon atoms or cycloalkylene diol.

As the aromatic dicarboxylic acids, esters of an aromatic dicarboxylic acid or acid halides of an aromatic dicarboxylic acid, there may be mentioned, for example, terephthalic acid, dimethyl terephthalate, chloride terephthalate, isophthalic acid, dimethyl isophthalate, chloride isophthalate.

As the alkylene diol having 2 to 8 carbon atoms or cycloalkylene diol, there may be mentioned, for example, ethylene glycol, diethylene glycol, triethylene glycol, 1,3-propanediol, 1,4-butanediol, 1,5-pentanediol, 1,6-hexanediol, 1,7-heptanediol, 1,8-octanediol, 1,4-cyclohexane-di-methanol.

The polyesters having hydroxyl groups at the both terminals thereof may be obtained by performing condensation using an excess of diols according to an ordinary method and then by removing the excessive amount of the diols.

In the compound having the hard segment, the aromatic ring, aliphatic ring, side chain may have a substituent.

The addition amount of the compound having the hard segment is not particularly limited, but is preferably 0.001 to 10 parts by weight, more preferably 0.01 to 5 parts by weight and still more preferably 0.1 to 3 parts by weight, based on 100 parts by weight of a monomer containing lactide or lactic acid as a main component.

In the present invention, a solvent may be used in performing the polymerization. The solvent includes, for example, an aliphatic hydrocarbon such as hexane, heptane, decane; an aromatic halogenated hydrocarbon such as chlorobenzene, o-dichlorobenzene; an alicyclic hydrocarbon such as cyclopentane, cyclohexane; an aromatic hydrocarbon such as benzene, toluene, xylene, mesitylene, ethylbenzene, diethylbenzene; an ether solvent such as diethyl ether, dioxane, tetrahydrofuran (THF), diglyme; and others. However, all the solvents which are substantially inert to the reaction may be used.

These solvents may be used alone or in combination with two or more kinds. From the viewpoints of the solubility of lactide or lactic acid, reaction temperature, reaction rate, easiness of solvent removal after the completion of reaction, , an aromatic hydrocarbon, an aromatic halogenated hydrocarbon and an ether solvent are preferred, and especially xylene, toluene, chlorobenzene, o-dichlorobenzene and diglyme are preferred. The amount used of the solvent is selected in a range from 0.1 to 20 times, preferably from 0.5 to 10 times and more preferably 1.0 to 5 times based on the total weight of lactide or lactic acid.

In addition, as a catalyst used in the polymerization, a well-known catalyst may be used. For example, there may be mentioned a tin catalyst such as tin octanoate (tin 2-ethylhexanoate), tin dibutyl dilaurate, tin chloride and the like; a titanium catalyst such as titanium chloride, titanium tetraisopropoxide; and a zinc catalyst such as zinc chloride, zinc acetate. Among these, a tin catalyst is preferred and tin octanoate is more preferred. The used amount of the catalyst is 0.001 to 5 parts by weight, preferably 0.003 to 1 part by weight and more preferably 0.005 to 0.1 part by weight, based on 100 parts by weight of lactide or a lactic acid.

The polymerization temperature is 60 to 250°C and preferably 100 to 230°C. For example, when a solvent is not used, the reaction temperature is preferably approximately 150 to 200°C. In addition, when lactide is reacted with a polymerization initiator using xylene as a solvent and tin octanoate as a catalyst, the reaction temperature is preferably approximately 110 to 150°C.

The polymerization time varies depending on the type of a monomer used, polymerization temperature, the amount of the catalyst, and is 0.1 to 24 hours, preferably 0.5 to 12 hours and more preferably 1 to 6 hours. In reality, the molecular weight is measured by gel permeation chromatography (GPC) in the reaction to determine the point at which a desired molecular weight is achieved as the reaction end point.

The linear polylactic acid compound (A) obtained in the manner described above has a weight average molecular weight from 5,000 to 500,000, preferably from 10,000 to 400,000 and more preferably from 50, 000 to 300, 000. In addition, the weight average molecular weight shown in the present invention is a value measured by gel permeation chromatography (GPC) (column temperature: 40°C, solvent: chloroform) in comparison with a polystyrene standard sample.

### <Polylactic Acid Compound (B)>

The polylactic acid compound (B), which is used in the polylactic acid resin composition of the present invention when necessary, is a polymer which has a moiety (hereinafter also referred to as a "soft segment") represented by the following formula (7) in a polymer chain of a lactic acid resin (D) described later and has a weight average molecular weight (Mw) of 5,000 to 500,000.

-X₃-R₂-X₄- (7)

In the formula (7), X₃ and X₄ each independently represent an oxygen atom, a sulfur atom or an NH group, R₂ represents an aliphatic hydrocarbon group having a molecular weight of 50 to 50000 and containing no ring structure, and the aliphatic hydrocarbon group may contain an oxygen atom, a nitrogen atom or a sulfur atom.

As described above, the "soft segment" in the present invention is an aliphatic hydrocarbon group containing no ring structure such as an aliphatic ring, an aromatic ring and the like (provided that it may contain an atom such as oxygen, nitrogen, sulfur and the like) and is a segment derived from a compound containing two or more functional groups derived from a hydroxyl group, thiol group or amino group.

The content of the soft segment in the polylactic acid compound (B) is not particularly limited, but is preferably 0.01 to 5 mol% and more preferably 0.03 to 3 mol%. As with the hard segment, in reality, it is preferable that the content of the soft segment is calculated from the targeted molecular weight or the amount for obtaining the targeted molecular weight is determined by actually performing the reaction.

The polylactic acid compound (B) may be obtained by a well-known and generally used method, and, for example, may be obtained by copolymerizing a compound having the soft segment with a monomer containing lactide or lactic acid as a main component. As another monomer other than lactide and lactic acid, there may be used cyclic esters (lactones) such as caprolactone, propiolactone, butyrolactone and the like, and hydroxyalkanoic acids such as hydroxybutanoic acid, hydroxypropanoic acid.

The compound having the soft segment preferably includes alkylene glycols, polyesters having two or more hydroxyl groups and polycarbonates having two or more hydroxyl groups and the like, and more preferably includes alkylene glycols, polyesters in which both terminals thereof are hydroxyl groups, polycarbonates in which both terminals thereof are hydroxyl groups.

The alkylene glycols preferably include polyethylene glycol (PEG) and polypropylene glycol (PPG), and have a weight average molecular weight from 50 to 50,000, preferably from 50 to 10,000 and more preferably from 100 to 5,000.

As the polyesters having two or more hydroxyl groups, for example, there may be mentioned polyesters in which a diol component is excessively reacted with dicarboxylic acid in polyesters produced from dicarboxylic acids and diols, or polyesters in which cyclic esters such as caprolactone are ring-opening polymerized with water or diols.

As the dicarboxylic acid used in the production of the polyesters, there may mentioned, for example, an aliphatic or aromatic dicarboxylic acid having 4 to 20 carbon atoms such as maleic acid, fumaric acid, succinic acid, adipic acid.

As the diols used in the production of the polyesters, there may mentioned, for example, a linear or branched aliphatic diol having 2 to 20 carbon atoms such as ethylene glycol, 1,3-propanediol, propylene glycol, 1,4-butanediol, neopentyl glycol.

As the polycarbonates having two or more hydroxyl groups, there may be mentioned aliphatic polycarbonates obtained by reacting diols with phosgene, the derivative thereof or carbonic esters.

As the diols used in the production of the aliphatic polycarbonates, there may be mentioned, for example, ethylene glycol, 1,3-propanediol, 1,4-butanediol, 1,5-pentanediol, 1,6-hexanediol, 1,4-cyclohexanedimethanol, 2,8-octanediol.

The weight average molecular weight of the soft segment may be calculated from the weight average molecular weight of a compound having the soft segment and is in the range from 50 to 50,000, preferably from 50 to 10,000 and more preferably 100 to 5, 000.

Although there may be no compatibility between the alkylene glycols, polyalkylene glycols, polyesters, polycarbonates and lactic acid or lactide, after the completion of the reaction, the polylactic acid compound (B) used in the present invention have to be homogeneous and exhibit transparency.

In the production of the polylactic acid compound (B), as with the linear polylactic acid compound (A), a solvent may be used in carrying out the polymerization of lactide, lactic acid or the other monomer. All of the type and amount of the solvent used in the reaction, the type and amount of the polymerization catalyst, polymerization temperature, polymerization time, polymerization method are the same as in the case of the linear polylactic acid compound (A).

The polylactic acid compound (B) may be used in an amount from 5 to 1, 900 parts by weight, preferably from 10 to 500 parts by weight and more preferably from 15 to 300 parts by weight, based on 100 parts by weight of the linear polylactic acid compound (A). If the content of the polylactic acid compound (B) is within the range, there may be obtained a composition having an excellent rate of crystallization and an excellent heat resistance.

### <Transparent Nucleating Agent (C)>

The polylactic acid resin composition of the present invention may contain a transparent nucleating agent (C) when necessary. Here, "a transparent nucleating agent" becomes a nucleating agent at the time of crystallization and imparts transparency when added to the linear polylactic acid compound (A) having a specific structure. Specifically, there may be mentioned a carboxylic acid amide, an aliphatic alcohol and an aliphatic carboxylic acid ester. These may be used alone or in combination with two or more kinds.

The specific examples of the carboxylic acid amide include
aliphatic monocarboxylic acid amides such as lauric acid amide, palmitic acid amide, oleic acid amide, stearic acid amide, erucic acid amide, behenic acid amide, ricinoleic acid amide and hydroxystearic acid amide;
N-substituted aliphatic monocarboxylic acid amides such as N-oleyl palmitic acid amide, N-oleyl oleic acid amide, N-oleyl stearic acid amide, N-stearyl oleic acid amide, N-stearyl stearic acid amide, N-stearyl erucic acid amide, methylol stearic acid amide and methylol behenic acid amide;
aliphatic biscarboxylic acid amides such as methylene bisstearic acid amide, ethylene bisstearic acid amide, ethylene bislauric acid amide, ethylene biscapric acid amide, ethylene biserucic acid amide, ethylene bisbehenic acid amide, ethylene bisisostearic acid amide, ethylene bishydroxystearic acid amide, butylene bisstearic acid amide, hexamethylene bisoleic acid amide, hexamethylene bisstearic acid amide, hexamethylene bisbehenic acid amide, hexamethylene bishydroxystearic acid amide, m-xylylene bisoleic acid amide, m-xylylene bisstearic acid amide, m-xylylene bisbehenic acid amide and m-xylylene bishydroxystearic acid amide;
N-substituted aliphatic carboxylic acid bisamides such as N,N' -dioleyl sebacic acid amide, N,N'-dioleyl adipic acid amide, N,N'-distearyl adipic acid amide, N,N'-distearyl sebacic acid amide, N, N' -distearyl isophthalic acid amide and N,N'-distearyl terephthalic acid amide; and
N-substituted ureas such as N-butyl-N'-stearyl urea, N-propyl-N'-stearyl urea, N-stearyl-N'-stearyl urea, N-phenyl-N'-stearyl urea, xylylene bisstearyl urea, xylylene bisstearyl urea, toluylene bisstearyl urea, hexamethylene bisstearyl urea, diphenylmethane bisstearyl urea and diphenylmethane bislauryl urea.

Among these, biscarboxylic acid amide is preferably used, and especially ethylene bislauric acid amide, ethylene bisoleic acid amide, ethylene bisstearic acid amide, ethylene bis-12-hydroxystearic acid amide, hexamethylene bislauric acid amide, hexamethylene bisoleic acid amide, hexamethylene bis-12-hydroxystearic acid amide, m-xylylene bislauric acid amide, m-xylylene bisoleic acid amide and m-xylylene bis-12-hydroxystearic acid amide are preferred. Further, from the viewpoint of having an excellent rate of crystallization, ethylene bislauric acid amide, ethylene bisoleic acid amide, ethylene bis-12-hydroxystearic acid amide, ethylene bisstearic acid amide, hexamethylene bislauric acid amide, hexamethylene bisoleic acid amide and hexamethylene bis-12-hydroxystearic acid amide, which have no aromatic ring in the molecule, are preferred.

The specific examples of the aliphatic alcohol include pentadecyl alcohol, cetyl alcohol, heptadecyl alcohol, 1,6-hexanediol, 1,8-octanediol, cyclohexane-1,2-diol, cyclohexane-1,4-diol.

The specific examples of the aliphatic carboxylic acid ester include lauric acid cetyl ester, palmitic acid cetyl ester, stearic acid cetyl ester, dilauric acid glycol, dipalmitic acid glycol, monolauric acid glycerin ester, monostearic acid glycerin ester and the like.

The transparent nucleating agent (C) may be used in a range from 0.1 to 10 parts by weight, preferably from 0.2 to 5 parts by weight and more preferably from 0.3 to 3 parts by weight, based on 100 parts by weight of the linear polylactic acid compound (A) or based on 100 parts by weight of the total of the linear polylactic acid compound (A) and the polylactic acid compound (B) and/or the lactic acid compound (D) which are used when necessary. If the content of the transparent nucleating agent (C) is within the range, the effect as a nucleating agent is significantly exhibited, and a resin composition having both high rate of crystallization and transparency is obtained.

### <Lactic Acid Resin (D)>

The polylactic acid resin composition of the present invention may contain a lactic acid resin (D) other than the linear polylactic acid compound (A) and the polylactic acid compound (B) where necessary. The "a lactic acid resin" means a polymer composition containing as the main component a polymer having 50% by mole or more, preferably 75% by mole or more of L-lactic acid units and/or D-lactic acid units, and it is synthesized by the polycondensation of lactic acid or by the ring-opening polymerization of lactide which is a cyclic dimer of lactic acid.

The lactic acid resin (D) may be a copolymer of lactic acid and a copolymerizable other monomer. Preferred is a polylactic acid having 100% by mole of lactic units and more preferred is a polylactic acid having 95% by mole or more, preferably 97% by mole or more of constitutional units derived from L-lactic acid. In addition, the lactic acid resin (D) may be a composition in which other resins, additives are mixed in addition to a polymer containing 50% by mole or more of lactic acid units, so long as the properties of the polymer are not significantly impaired.

The lactic acid resin (D) has a weight average molecular weight (Mw) from 5,000 to 500,000, preferably from 10,000 to 400,000 and more preferably 50,000 to 300,000.

The monomer copolymerizable with lactic acid includes a hydroxycarboxylic acid (for example, glycolic acid, caproic acid ), an aliphatic polyhydric alcohol (for example, butanediol, ethylene glycol), an aliphatic polyhydric carboxylic acid (for example, succinic acid, adipic acid), and others.

When the lactic acid resin (D) is a copolymer, a form of arrangement of the copolymer may be any form of a random copolymer, an alternating copolymer, a block copolymer, a graft copolymer . These may be a copolymer in which at least part thereof is copolymerized with a polyhydric alcohol of bifunctional or more such as ethylene glycol, diethylene glycol, triethylene glycol, a polyethylene glycol, propylene glycol, dipropylene glycol, an ethylene glycol/propylene glycol copolymer, 1,3-butanediol, 1,4-butanediol, 3-methyl-1,5-pentanediol, 1,6-hexanediol, 1,9-nonanediol, neopentyl glycol, polytetramethylene glycol, glycerin, trimethylol propane; a polyvalent isocyanate such as xylylene diisocyanate, 2,4-tolylene diisocyanate and the like; polysaccharides such as cellulose, acetyl cellulose, ethyl cellulose; and others. In addition, at least part thereof may have any structure of a linear, cyclic, branched, star, three-dimensional net structure.

The lactic acid resin (D) may be used in an amount of 5 to 500 parts by weight, preferably 15 to 300 parts by weight and more preferably 30 to 250 parts by weight, based on 100 parts by weight of the linear polylactic acid compound (A). If the content of the lactic acid resin (D) is within the range, a composition excellent in heat resistance and transparency is obtained.

### <Various Additives and the like>

To the polylactic acid resin composition of the present invention, other resins or polymers other than the components (A) to (D) and various additives may be added, according to the objective (for example, improvement of moldability, secondary processability, degradation property, tensile strength, heat resistance, storage stability, weather resistance, flame retardancy and the like).

The other resins or polymers include polycarbonate resin, unmodified polyolefin, vinyl resin, polystyrene, polyamide, acrylic resin, polyphenylene sulfide resin, polyether ether ketone resin, polyester, polysulfone, polyphenylene oxide, polyimide, polyether imide, acrylonitrile-butadiene-styrene copolymer (ABS), ethylene-α-olefin copolymer rubber, conjugated diene rubber, styrene rubber, phenolic resin, melamine resin, polyester resin, silicone resin, epoxy resin . These may be used alone or in combination with two or more kinds.

The various additives include, for example, a plasticizer, an antioxidant, an ultraviolet absorber, a heat stabilizer, a flame retardant, an internal release agent, an inorganic additive, an organic additive, an antistatic agent, a surface wetting improver, an incineration auxiliary, a pigment, a dye, a nucleating agent, a lubricant, a natural substance, and preferably include a plasticizer.

The plasticizer includes, for example, triacetin, triethylene glycol diacetate, triethyl acetyl citrate, tributyl acetyl citrate and dibutyl sebacate.

The inorganic additive and lubricant may be used to improve blocking prevention or slipping properties of a film or a sheet. Such an inorganic additive includes silica, mica, talc, glass fiber, glass bead, kaolin, kaolinite, barium sulfate, calcium sulfate, magnesium hydroxide, wollastonite, carbon fiber, calcium silicate fiber, magnesium oxysulfate fiber, potassium titanate fiber, calcium sulfite, white carbon, clay, montmorillonite, titanium oxide, zinc oxide. These may be used alone or in combination with two or more kinds. Especially when a glass fiber is used as the inorganic additive, a resin composition may be expected to be increased in heat resistance.

The organic additive includes starch and the derivative thereof, cellulose and the derivative thereof, pulp and the derivative thereof, paper and the derivative thereof, wheat flour, bean curd refuse, bran, coconut shell, coffee waste, protein, or phthalic acid-, aliphatic polybasic acid-, glycerin-, citric acid-, glycol- and olefin- low molecular weight compounds, or polyethylene terephthalate fiber, polyethylene naphthalate fiber, and aramid fiber. These may be used alone or in combination with two or more kinds.

The addition amount of the other resins, polymers or additives is arbitrarily selected depending on the application, so long as the object of the present invention is not impaired.

### <Production Method of Polylactic Acid Resin Composition>

As a method for producing the polylactic acid resin composition of the present invention, a well-known production method may be arbitrarily employed. For example, there may be adopted a method of uniformly premixing each component using a high-speed mixer, a low-speed mixer and then melt-kneading the resulting composition using a single- or multiple-screw extruder having sufficient kneading capacity at the melting point or higher of the resin, a method of mixing and kneading at the time of melting, a method of removing a solvent after mixing in a solution.

The production of a polylactic acid composition may be carried out before the molding of a molded article, or the production of the composition and the molding may be carried out simultaneously. When the composition is produced before the molding, the shape of the resin composition is preferably a pellet, rod, powder.

### <Polylactic Acid Resin Composition>

The polylactic acid resin composition of the present invention is excellent in that it has a fast rate of crystallization. Here, in the differential scanning colorimetry (DSC) analysis, when a polymer is heated to be melt and then cooled to a predetermined temperature at a fixed rate and maintained at the predetermined temperature, the "rate of crystallization" in the present invention is determined by the time from when the predetermined temperature is maintained until when the exothermal peak due to the crystallization becomes the maximum value (hereinafter also referred to as a "isothermal crystallization time"). If the time is shorter, the rate of crystallization is faster. In addition, the predetermined temperature is arbitrarily selected depending on a polymer to be measured.

The method for the determination of the isothermal crystallization time is specifically as follows. When a resin is comprised of units derived from lactic acid as with the present invention, 5 to 6 mg of a polymer in a film state is weighed in a nitrogen-sealed pan and it is inserted into the nitrogen-sealed DSC measuring part preset at 30°C and then heated at a temperature rising rate of 100°C/min to melt the polymer at 220 °C for 3 minutes. Subsequently, when the polymer is cooled to a predetermined crystallization temperature (for example 100°C) at a cooling rate of 99°C/min and maintained at the same temperature, the isothermal crystallization time is determined by the time from when the polymer is cooled to the predetermined temperature until when the exothermal peak due to the crystallization becomes the maximum value.

The isothermal crystallization time of the polylactic acid resin composition of the present invention is 5 minutes or less, preferably from 0.1 to 4 minutes and more preferably from 1 to 3 minutes.

### <Molded Article>

A molded article of the present invention is composed of the polylactic acid resin composition of the present invention described above. The molded article of the present invention may be produced by a well-known and generally used method, for example, by the following methods.

(1) In extrusion molding, a film or a sheet may be formed by molding the polylactic acid resin composition of the present invention by a typical T die extrusion molding machine.

(2) In injection molding, a pellet of the polylactic acid resin composition of the present invention is melt and softened, and then the resultant resin composition is filled in a mold to obtain a molded article in a molding cycle of 20 to 300 seconds.

(3) In blow molding (injection blow molding, stretching blow molding or direct blow molding), for example, in case of injection blow molding, a pellet of the polylactic acid resin composition of the present invention is melt by a typical injection blow molding machine, and then the resultant resin composition is filled in a mold to obtain a pre-molded article. The resulting pre-molded article is heated again in an oven (heating furnace) and then placed in a mold maintained at a fixed temperature and pressurized air is fed to blow, and thereby a blow bottle may be obtained.

(4) In vacuum forming and vacuum pressure forming, a film or sheet molded by the same method as in the extrusion molding of the (1) is used as a pre-molded article. The resulting pre-molded article is heated to soften once and is vacuum formed or vacuum pressure formed in a mold maintained at a fixed temperature using a typical vacuum forming machine, and thereby a molded article may be obtained.

(5) In laminate molding, a laminate molded article may be obtained by a method of laminating a film or sheet obtained by the extrusion molding method (1) on other substrate by an adhesive or heat; an extrusion lamination method of directly extruding a molten resin from a T die onto a substrate such as papers, metals, plastics in the same manner as in the extrusion molding method (1); a coextrusion method of melting each of the resin composition of the present invention by a separate extruder and then flowing each melted resin together at die heads to simultaneously extrude; a co-extrusion lamination method combining those methods.

(6) In tape yarn molding, a film or sheet molded in the same manner as in the extrusion molding (1) is slit into a specific width and is uniaxially hot-stretched in a temperature range from 60 to 140°C, and is further heat fixed in a temperature range from 80 to 160°C when necessary, and thereby a molded article may be obtained.

(7) In yarn molding, a yarn may be obtained by a melt spinning method of melting the polylactic acid resin composition of the present invention at a temperature of from 150 to 240°C using an extruder and then discharging the resulting composition from a spinneret. When needed, a yarn may be formed by uniaxially hot-stretching the composition in a temperature range from 60 to 100°C, and in some cases, by further heat fixing in a temperature range from 80 to 140°C.

(8) In non-woven molding, a molded article may be formed by a span bond method or a melt blown method. In the span bond method, in the same manner as in the yarn molding (7), a web is formed by melt spinning the resin composition using a spinneret having a plurality of holes and then stretching the resulting yarn using an air sucker installed at the lower part of the spinneret, and the web is accumulated on a trapping face and further is press bonded or heat welded by an emboss roll and a smooth roll, and thereby a non-woven fabric may be obtained. In the melt blown method, the molten resin discharged from the spinneret having a plurality of holes is brought into contact with a high speed heated gas blown from a heated gas outlet to form fine fibers and the resulting fibers are accumulated on a moving support, and thereby a non-woven fabric may be obtained.

The molded article of the present invention, which is heat treated at 80 to 120°C for 1 to 300 seconds, has a haze of 0.1 to 15%, preferably 0.1 to 12% and more preferably 0.1 to 11% as measured at a thickness of 100 µm, and has a crystallinity of 35% or more, preferably 38 to 60% and more preferably 42 to 55%.

The "crystallinity" in the present invention is determined by differential scanning colorimetry (DSC). Specifically, firstly, a non-oriented film obtained by press molding is heat treated in an oven at 105°C for a predetermined time period. 5 to 6 mg of the film after the heat treatment is weighed in a nitrogen-sealed pan, and it is inserted into the nitrogen-sealed DSC measuring part preset at 30°C and then heated to 220°C at a temperature rising rate of 10°C/min. The crystallization enthalpy (ΔHc) and crystal melting enthalpy (ΔHm) are measured to determine [[(ΔHm-ΔHc) / (ΔH₀)]×100], which is used as a crystallinity. Here, ΔH₀ represents a completely ideal crystal melting enthalpy, for example, the ΔH₀ of polylactic acid is 93 J/g. In addition, the "haze" in the present invention is a value measured by a hazemeter.

### <Application>

The polylactic acid resin composition of the present invention may be molded by the various molding and processing methods described above and may be suitably used for various applications without any particular limitation. In addition, these molded articles may be employed for various applications, such as automobile parts, home electric appliance material parts, electric and electronic components, building members, civil engineering members, agricultural materials, commodities, various films, breathable films or sheets, foamed products suitable for general industrial applications and recreation uses, yarns, textiles, medical or sanitary materials, and the like, and preferably, for automobile material parts, home electric appliance material parts and electric and electronic parts which require heat resistance and impact resistance.

Specifically, there may be mentioned the development into parts such as front doors, wheel caps and the like, in which resin parts are conventionally used, in the automobile part material uses; the development into package parts of products such as personal computers, headphone stereos and mobile phones in home electric appliance material part uses; and the development into reflective material films and sheets and polarizing films and sheets in the electric and electronic parts.

### EXAMPLES

Hereinafter, the present invention will be specifically explained based on Examples, but the present invention is not limited by these Examples.

### <Weight Average Molecular Weight>

The weight average molecular weight was determined by gel permeation chromatography (GPC) ["Shodex GPC-101" manufactured by Showa Denko K.K., column: "PLgel mixd c" manufactured by Polymer Laboratories, Inc., two columns in series, column temperature: 40°C, mobile phase: chloroform, flow rate: 1 mL/min] through the comparison with a polystyrene standard sample.

### <Rate of crystallization (Isothermal crystallization time)>

The Rate of crystallization was determined by DSC ("DSC-60" manufactured by Shimadzu Corporation). 5 to 6 mg of a non-oriented film obtained by press molding was weighed in a nitrogen-sealed pan, and it was inserted into the nitrogen-sealed DSC measuring part preset at 30°C and then heated at a temperature rising rate of 100°C/min to melt at 220°C for 3 minutes. After the melting, it was cooled to 100°C at a cooling rate of 99°C/min. The time taken for the crystallization peak to become maximum was measured using the time when it was cooled to 100°C as the starting time.

### <Crystallinity>

The crystallinity was measured by DSC ("DSC-60" manufactured by Shimadzu Corporation). A non-oriented film obtained by press molding was heat treated in an oven at 105°C for a predetermined time period. 5 to 6 mg of the film after the heat treatment was weighed in a nitrogen-sealed pan, and it was inserted into the nitrogen-sealed DSC measuring part preset at 25°C and then heated to 220°C at a temperature rising rate of 10°C/min. The crystallization enthalpy (ΔHc) and crystal melting enthalpy (ΔHm) were measured to determine [[(ΔHm-ΔHc)/(ΔH₀)]×100], which was used as a crystallinity. Here, ΔH₀ represents a completely ideal crystal melting enthalpy, and a value of 93 J/g of polylactic acid was used.

### <Transparency (Haze)>

The haze was determined by a hazemeter "NDH2000" manufactured by Nippon Denshoku Industries Co., Ltd.) according to JIS K7105.

### <Synthesis Example 1>

A 200 mL glass reaction apparatus equipped with a stirrer, a thermometer and a condenser was charged with 200.0 g (1.389 mol) of L-lactide, 2.43 g (0.017 mol) of D-lactide, 1.58 g (0.00253 mol) of ethylene-bis-12-hydroxystearylamide and 16.2 mg of tin octanoate, and the mixture was heated to 190°C while stirring at a rate of 150 rpm under a nitrogen atmosphere. While continuously stirring, polymerization was carried out at 190 to 200°C for 2 hours. During the polymerization, because as the viscosity of the polymer increased, stirring became difficult, the stirring rate was decreased to 50 rpm while observing the condition. The polymerization was completed by confirming that the viscosity of the resulting polymer was sufficiently increased and the molecular weight (Mw) of the polymer measured by GPC was 200,000.

After the polymerization, after once discharging the polymer to a tray to cool, the polymer was dissolved in 2,000 mL of chloroform. While stirring the chloroform solution, methanol was added by small and small. Since the solution was clouded when approximately 2,000 mL of methanol was added, the addition of methanol was temporarily stopped, and the polymer was gradually precipitated while stirring. After 2 hours, since the polymer was fully precipitated, an approximately 4,000 mL of methanol was further added, and the mixture was sufficiently stirred for one hour to remove the remaining lactide, and then the polymer was suction filtrated and separated. The filtered agglomerates were washed by rinsing with a small amount of methanol and then further stirred in 3,000 mL of methanol for one hour, and then the agglomerates were suction filtrated to remove completely the remaining lactide. The polymer obtained in this manner was dried at 50°C and 2 kPa for 24 hours to obtain 195.2 g of polylactic acid (B-1) having a partial structure derived from ethylene-bis-12-hydroxystearylamide. The resulting polylactic acid (B-1) had a weight average molecular weight (Mw) of 198,000.

### <Synthesis Example 2>

Using the same reaction apparatus as in Synthesis Example 1, 190.0 g of polylactic acid (B-2) having a partial structure derived from PEG#200 was obtained in the same manner as in Synthesis Example 1 except for changing 1.58 g (0.00253 mol) of ethylene-bis-12-hydroxystearylamide to 0.36 g (Mw=200, 0.0036 mol as a hydroxyl group) of PEG#200 (reagent special grade, manufactured by Kanto Chemical Co., Inc.). The resulting polylactic acid (B-2) had a weight average molecular weight (Mw) of 214,000.

### <Synthesis Example 3>

Using the same reaction apparatus as in Synthesis Example 1, 190.2 g of polylactic acid (B-3) having a partial structure derived from PPG#2000 was obtained in the same manner as in Synthesis Example 1 except for changing 1.58 g (0.00253 mol) of ethylene-bis-12-hydroxystearylamide to 4.75 g (0.00432 mol as a hydroxyl group) of PPG#2000 (Mw=2200, reagent special grade, manufactured by Kanto Chemical Co., Inc.). The resulting polylactic acid (B-3) had a weight average molecular weight (Mw) of 198,000.

### [Example 1]

A 200 mL glass reaction apparatus equipped with a stirrer, a thermometer and a condenser was charged with 142.3 g (0.988 mol)of L-lactide, 1.7 g (0.122 mol)of D-lactide, 0.433 g (0.0018 mol) of 4,4'-isopropylidenedicyclohexanol (hydrogenated bisphenol A) and 11.5 mg of tin octanoate, and the mixture was heated to 190°C while stirring at a rate of 150 rpm under a nitrogen atmosphere. While continuously stirring, polymerization was carried out at 190 to 200°C for 2 hours. During the polymerization, because as the viscosity of the polymer increased, stirring became difficult, the stirring rate was decreased to 50 rpm while observing the condition. The polymerization was completed by confirming that the viscosity of the resulting polymer was sufficiently increased and the molecular weight (Mw) of the polymer measured by GPC was 178, 000.

After the polymerization, after once discharging the polymer to a tray to cool, the polymer was dissolved in 2,000 mL of chloroform. While stirring the chloroform solution, methanol was added by small and small. Since the solution was clouded when approximately 2,000 mL of methanol was added, the addition of methanol was temporarily stopped, and the polymer was gradually precipitated while stirring. After 2 hours, since the polymer was fully precipitated, an approximately 4,000 mL of methanol was further added, and the mixture was sufficiently stirred for one hour to remove the remaining lactide, and then the polymer was suction filtrated and separated. The filtered agglomerates were washed by rinsing with a small amount of methanol and then further stirred in 3,000 mL of methanol for one hour, the agglomerates were suction filtered to remove completely the remaining lactide. The polymer obtained in this manner was dried at 50°C and 2 kPa for 24 hours to obtain 134.2 g of polylactic acid (A-1) having a partial structure derived from 4,4'-isopropylidenedicyclohexanol (hydrogenated bisphenol A) . The resulting polylactic acid (A-1) had a weight average molecular weight (Mw) of 179,000.

### [Example 2]

Using the same reaction apparatus as in Example 1, 130.5 g of polylactic acid (A-2) having a partial structure derived from N,N'-(2-hydroxyethyl)pyromellitimide was obtained in the same manner as in Example 1 except for changing 0.433 g (0.0018 mol) of 4,4'-isopropylidenedicyclohexanol (hydrogenated bisphenol A) to 0.548 g (0.0018 mol) of N,N'-(2-hydroxyethyl) pyromellitimide. The resulting polylactic acid (A-2) had a weight average molecular weight (Mw) of 157,000.

### [Example 3]

Using the same reaction apparatus as in Example 1, 129.8 g of polylactic acid (A-3) having a partial structure derived from 6,6'-bis(2-hydroxyethoxy)-3,3,3',3'-tetramethyl-1,1-spirobiindane was obtained in the same manner as in Example 1 except for changing 0.433 g (0.0018 mol) of 4,4'-isopropylidene dicyclohexanol (hydrogenated bisphenol A) to 0.713 g (0.0018 mol) of 6,6'-bis(2-hydroxyethoxy)-3,3,3',3'-tetramethyl-1,1-spirobiindane. The resulting polylactic acid (A-3) had a weight average molecular weight (Mw) of 182,000.

### [Example 4]

Using the same reaction apparatus as in Example 1, 137.2 g of polylactic acid (A-4) having a partial structure derived from p-xylyleneglycol was obtained in the same manner as in Example 1 except for changing 0.433 g (0.0018 mol) of 4,4'-isopropylidenedicyclohexanol (hydrogenated bisphenol A) to 0.248 g (0.0018 mol) of p-xylyleneglycol. The resulting polylactic acid (A-4) had a weight average molecular weight (Mw) of 183,000.

### [Example 5]

Using the same reaction apparatus as in Example 1, 133.5 g of polylactic acid (A-5) having a partial structure derived from 4,4'-bicyclohexanol was obtained in the same manner as in Example 1 except for changing 0.433 g (0.0018 mol) of 4,4'-isopropylidenedicyclohexanol (hydrogenated bisphenol A) to 0.357 g (0.0018 mol) of 4,4'-bicyclohexanol. The resulting polylactic acid (A-5) had a weight average molecular weight (Mw) of 164,000.

### [Example 6]

Using the same reaction apparatus as in Example 1, 135.0 g of polylactic acid (A-6) having a partial structure derived from 4,8-bis(hydroxymethyl)tricyclo(5.2.1.0 2,6)decane was obtained in the same manner as in Example 1 except for changing 0.433 g (0.0018 mol) of 4,4'-isopropylidenedicyclohexanol (hydrogenated bisphenol A) to 0.35 g (0.0018 mol) of 4,8-bis(hydroxymethyl)tricyclo(5.2.1.0 2,6)decane. The resulting polylactic acid (A-6) had a weight average molecular weight (Mw) of 182,000.

### [Example 7]

Using the same reaction apparatus as in Example 1, 128.6 g of polylactic acid (A-7) having a partial structure derived from polybutylene-terephthalate was obtained in the same manner as in Example 1 except for changing 0.433 g (0.0018 mol) of 4,4'-isopropylidenedicyclohexanol (hydrogenated bisphenol A) to 1.52 g (hydroxyl group equivalent: 770 g/eq) of a polyester having hydroxyl groups at both terminals thereof, which was obtained by reacting chloride terephthalate with 1, 4-butanediol. The resulting polylactic acid (A-7) had a weight average molecular weight (Mw) of 283,000.

### [Example 8]

Using the same reaction apparatus as in Example 1, 129.2 g of polylactic acid (A-8) having a partial structure derived from polybutylene-isophthalate was obtained in the same manner as in Example 1 except for changing 0.433 g (0.0018 mol) of 4,4'-isopropylidenedicyclohexanol (hydrogenated bisphenol A) to 3.6 g (hydroxyl group equivalent: 1135 g/eq) of a polyester having hydroxyl groups at both terminals thereof, which was obtained by reacting chloride isophthalate with 1, 4-butanediol. The resulting polylactic acid (A-8) had a weight average molecular weight (Mw) of 207,000.

### [Example 9]

Using the same reaction apparatus as in Example 1, 125.8 g of polylactic acid (A-9) having a partial structure derived from polyhexylene-terephthalate was obtained in the same manner as in Example 1 except for changing 0.433 g (0.0018 mol) of 4,4'-isopropylidenedicyclohexanol (hydrogenated bisphenol A) to 3.7 g (hydroxyl group equivalent: 1062 g/eq) of a polyester having hydroxyl groups at both terminals thereof, which was obtained by reacting chloride terephthalate with 1, 6-hexanediol. The resulting polylactic acid (A-9) had a weight average molecular weight (Mw) of 172,000.

### [Example 10]

Using the same reaction apparatus as in Example 1, 127.5 g of polylactic acid (A-10) having a partial structure derived from polyoctylene-terephthalate was obtained in the same manner as in Example 1 except for changing 0.433 g (0.0018 mol) of 4,4'-isopropylidenedicyclohexanol (hydrogenated bisphenol A) to 2.2 g (hydroxyl group equivalent: 630 g/eq) of a polyester having hydroxyl groups at both terminals thereof, which was obtained by reacting chloride terephthalate with 1,8-octanediol. The resulting polylactic acid (A-10) had a weight average molecular weight (Mw) of 183,000.

### [Example 11]

Using the same reaction apparatus as in Example 1, 133.8 g of polylactic acid (A-11) having a partial structure derived from a chloride terephthalate/1,4-cyclohexanedimethanol-polyester whose both terminals are hydroxyl groups was obtained in the same manner as in Example 1 except for changing 0.433 g (0.0018 mol) of 4,4'-isopropylidenedicyclohexanol (hydrogenated bisphenol A) to 9.0 g (hydroxyl group equivalent: 2620 g/eq) of a polyester having hydroxyl groups at both terminals thereof, which was obtained by reacting chloride terephthalate with 1,4-cyclohexanedimethanol. The resulting polylactic acid (A-11) had a weight average molecular weight (Mw) of 167,000.

### [Examples 12 to 22]

Using a laboplast mill, the polylactic acids (A-1) to (A-11) synthesized in Examples 1 to 11 and the nucleating agent (C) were kneaded in the parts by weight shown in Table 1 under the conditions at a temperature of 200°C for 5 minutes and at a rotation speed of 50 rpm. The kneaded product was pressed for 5 minutes under the conditions of 200°C and 10 MPa to obtain a film having a thickness of 100 µm. The isothermal crystallization time of the resulting film was measured as described above. Further, the film was placed in an oven at 105°C for 20 seconds and 60 seconds and was subjected to annealing (heat treatment), and then the crystallinity and transparency (haze) of the film before and after the annealing were measured as described above. The results are shown in Table 1.

### [Examples 23 to 33]

Using a laboplast mill, the polylactic acids (A-1) to (A-11) synthesized in Examples 1 to 11, the transparent nucleating agent (C) and a commercially available polylactic acid (D-1) [trademark LACEA, grade H-100, produced by Mitsui Chemicals Inc.] were kneaded in the parts by weight shown in Table 1 under the conditions at a temperature of 200°C for 5 minutes and at a rotation speed of 50 rpm. The kneaded product was pressed for 5 minutes under the conditions of 200°C and 10 MPa to obtain a film having a thickness of 100 µm. The isothermal crystallization time of the resulting film was measured as described above. Further, the film was placed in an oven at 105°C for 20 seconds and 60 seconds and was subjected to annealing (heat treatment), and then the crystallinity and transparency (haze) of the film before and after the annealing were measured as described above. The results are shown in Table 2.

### [Examples 34 to 42]

Using a laboplast mill, the polylactic acid (A) synthesized in Examples 1, 3 and 7, the polylactic acid (B) synthesized in Synthesis Examples 1 to 3 and the transparent nucleating agent (C) were kneaded in the parts by weight shown in Table 1 under the conditions at a temperature of 200°C for 5 minutes and at a rotation speed of 50 rpm. The kneaded product was pressed for 5 minutes under the conditions of 200°C and 10 MPa to obtain a film having a thickness of 100 µm. The isothermal crystallization time of the resulting film was measured as described above. Further, the film was placed in an oven at 105°C for 20 seconds and 60 seconds and was subjected to annealing (heat treatment), and then the crystallinity and transparency (haze) of the film before and after the annealing were measured as described above. The results are shown in Table 3.

### [Comparative Example 1]

A film was prepared in the same manner as in Example 12 except for kneading a commercially available polylactic acid (D-1) [trademark LACEA, grade H-100, manufactured by Mitsui Chemicals Inc.] and the transparent nucleating agent (C) in the parts by weight shown in Table 1. The isothermal crystallization time, crystallinity and transparency of the film were measured. The results are shown in Table 1 and Table 2.

**[Table 1]**

| | Composition | | | | | | | | Isothermal Crystallization Time (Min) | Crystallinity (%) | | | Haze (%) | | |
|---|---|---|---|---|---|---|---|---|---|---|---|---|---|---|---|
| | Polylactic acid (A) | | Polylactic acid (B) | | Transparent Nucleating agent (c) | | Lactic Acid Resin (D) | | | Annealing Time (Sec) | | | Annealing Time (Sec) | | |
| | Type | Parts by Weight | Type | Parts by Weight | Type | Parts by Weight | Type | Parts by Weight | | 0 | 20 | 60 | 0 | 20 | 60 |
| Example 12 | A-1 | 100 | - | - | EBL | 0.5 | - | - | 1.1 | 21.2 | 29.0 | 45.8 | 0.85 | 1.32 | 6.58 |
| Example 13 | A-2 | 100 | - | - | EBL | 0.5 | - | - | 1.2 | 21.8 | 29.8 | 46.0 | 1.02 | 1.36 | 6.82 |
| Example 14 | A-3 | 100 | - | - | EBL | 0.5 | - | - | 0.9 | 16.0 | 31.1 | 45.9 | 0.94 | 1.21 | 6.20 |
| Example 15 | A-4 | 100 | - | - | EBL | 0.5 | - | - | 0.9 | 18.5 | 32.1 | 46.2 | 0.87 | 1.33 | 5.80 |
| Example 16 | A-5 | 100 | - | - | EBL | 0.5 | - | - | 0.9 | 19.3 | 30.9 | 44.7 | 0.89 | 1.25 | 6.97 |
| Example 17 | A-6 | 100 | - | - | EBL | 0.5 | - | - | 1.0 | 20.7 | 30.3 | 45.2 | 0.91 | 1.29 | 6.25 |
| Example 18 | A-7 | 100 | - | - | EBL | 0.5 | - | - | 0.9 | 14.8 | 25.8 | 45.8 | 0.45 | 1.36 | 5.75 |
| Example 19 | A-8 | 100 | - | - | EBL | 0.5 | - | - | 1.7 | 16.8 | 28.6 | 43.2 | 0.54 | 1.63 | 6.22 |
| Example 20 | A-9 | 100 | - | - | EBL | 0.5 | - | - | 0.8 | 18.3 | 28.1 | 44.1 | 0.77 | 1.21 | 4.78 |
| Example 21 Example | A-10 | 100 | - | - | EBL | 0.5 | - | - | 0.9 | 19.9 | 23.8 | 41.7 | 0.69 | 1.18 | 4.97 |
| Example 22 | A-11 | 100 | - | - | EBL | 0.5 | - | - | 1.0 | 20.0 | 23.4 | 40.6 | 0.65 | 1.18 | 4.20 |
| Comparative Example 1 | - | - | - | - | EBL | 0.5 | D-1 | 100 | 1.5 | 0 | 5.11 | 28.6 | 0.7 | 4.01 | 57.7 |

| | | | | | | | | | | | | | | | |
|---|---|---|---|---|---|---|---|---|---|---|---|---|---|---|---|
| EBL: ethylene bislauric acid amide | | | | | | | | | | | | | | | |

**[Table 2]**

| | Composition | | | | | | | | Isothermal Crystallization Time (Min) | Crystallinity (%) | | | Haze (%) | | |
|---|---|---|---|---|---|---|---|---|---|---|---|---|---|---|---|
| | Polylactic acid (A) | | Composition Polylactic acid (B) | | Transparent Nucleating Agent (C) | | Lactic Acid Resin (D) | | | Annealing Time (Sec) | | | Annealing Time (Sec) | | |
| | Type | Parts by Weight | Type | Parts by Weight | Type | Parts by Weight | Type | Parts by Weight | | 0 | 20 | 60 | 0 | 20 | 60 |
| Example 23 | A-1 | 50 | - | - | EBL | 0.5 | D-1 | 50 | 1.2 | 20.1 | 28.7 | 44.2 | 0.75 | 1.24 | 5.27 |
| Example 24 | A-2 | 50 | - | - | EBL | 0.5 | D-1 | 50 | 1.2 | 20.8 | 27.4 | 44.9 | 0.80 | 1.16 | 6.08 |
| Example 25 | A-3 | 50 | - | - | EBL | 0.5 | D-1 | 50 | 1.0 | 17.8 | 30.2 | 45.5 | 1.09 | 1.36 | 6.77 |
| Example 26 | A-4 | 50 | - | - | EBL | 0.5 | D-1 | 50 | 1.0 | 18.6 | 31.5 | 49.8 | 0.98 | 1.30 | 5.49 |
| Example 27 | A-5 | 50 | - | - | EBL | 0.5 | D-1 | 50 | 0.9 | 19.8 | 30.1 | 46.0 | 1.00 | 1.32 | 6.05 |
| Example 28 | A-6 | 50 | - | - | EBL | 0.5 | D-1 | 50 | 1.0 | 22.1 | 29.9 | 45.8 | 0.91 | 1.29 | 5.27 |
| Example 29 | A-7 | 50 | - | - | EBL | 0.5 | D-1 | 50 | 0.7 | 14.8 | 27.7 | 42.0 | 0.82 | 1.25 | 4.86 |
| Example 30 | A-8 | 20 | - | - | EBL | 0.5 | D-1 | 80 | 1.0 | 17.9 | 29.1 | 44.5 | 0.89 | 1.36 | 5.12 |
| Example 31 | A-9 | 50 | - | - | EBL | 0.5 | D-1 | 50 | 0.8 | 14.8 | 28.8 | 44.0 | 0.42 | 1.36 | 2.75 |
| Example 32 | A-10 | 80 | - | - | EBL | 0.5 | D-1 | 20 | 0.9 | 20.8 | 31.0 | 41.7 | 0.51 | 1.32 | 3.85 |
| Example 33 | A-11 | 50 | - | - | EBL | 0.5 | D-1 | 50 | 1.0 | 22.5 | 29.3 | 42.4 | 0.91 | 1.34 | 5.03 |
| Comparative Example 1 | - | - | - | - | EBL | 0.5 | D-1 | 100 | 1.5 | 0 | 5.11 | 28.6 | 0.7 | 4.01 | 57.7 |

| | | | | | | | | | | | | | | | |
|---|---|---|---|---|---|---|---|---|---|---|---|---|---|---|---|
| EBL: ethylene bislauric acid amide | | | | | | | | | | | | | | | |

**[Table 3]**

| | Composition | | | | | | | | Isothermal Crystalliz ation Time (Min) | Crystallinity (%) | | | Haze (%) | | |
|---|---|---|---|---|---|---|---|---|---|---|---|---|---|---|---|
| | Polylactic Acid (A) | | Polylactic acid (B) | | Transparent Nucleating Agent (C) | | Lactic Acid Resin (D) | | | Annealing Time (Sec) | | | Annealing Time (Sec) | | |
| | Type | Parts by Weight | Type | Parts by Weight | Type | Parts by Weight | Typ e | Parts by Weight | | 0 | 20 | 60 | 0 | 20 | 60 |
| Example 34 | A-1 | 50 | B-1 | 50 | EBL | 0.5 | - | - | 0.8 | 21.3 | 28.7 | 45.7 | 1.05 | 2.01 | 6.44 |
| Example 35 | A-3 | 50 | B-1 | 50 | EBL | 0.5 | - | - | 0.6 | 22.0 | 30.4 | 47.9 | 1.00 | 1.95 | 5.82 |
| Example 36 | A-7 | 50 | B-1 | 50 | EBL | 0.5 | - | - | 1.0 | 16.9 | 26.9 | 39.8 | 0.88 | 2.21 | 6.03 |
| Example 37 | A-1 | 50 | B-2 | 50 | EBL | 0.5 | - | - | 1.1 | 22.7 | 28.7 | 45.3 | 0.56 | 1.05 | 5.89 |
| Example 38 | A-3 | 50 | B-2 | 50 | EBL | 0.5 | - | - | 1.1 | 18.5 | 30.0 | 43.7 | 0.79 | 1.26 | 5.70 |
| Example 39 | A-7 | 50 | B-2 | 50 | EBL | 0.5 | - | - | 1.2 | 19.0 | 31.1 | 42.8 | 0.44 | 1.34 | 4.17 |
| Example 40 | A-1 | 50 | B-3 | 50 | EBL | 0.5 | - | - | 1.2 | 15.9 | 30.9 | 43.9 | 1.21 | 1.90 | 5.90 |
| Example 41 | A-3 | 50 | B-3 | 50 | EBL | 0.5 | - | - | 1.1 | 18.5 | 28.5 | 41.0 | 0.78 | 1.97 | 6.34 |
| Example 42 | A-7 | 50 | B-3 | 50 | EBL | 0.5 | - | - | 1.2 | 19.8 | 27.0 | 42.6 | 0.75 | 1.49 | 4.11 |

| | | | | | | | | | | | | | | | |
|---|---|---|---|---|---|---|---|---|---|---|---|---|---|---|---|
| EBL: ethylene bislauric acid amide | | | | | | | | | | | | | | | |

## Claims

1. A linear polylactic acid compound (A), which
(i) comprises a moiety of the formula -X₁-R₁-X₂- (1), wherein
X₁, X₂ each independently are O, S or NH; and
R₁ is a divalent hydrocarbon group containing at least one aromatic or aliphatic ring, and the hydrocarbon group may contain an O- or N-atom;
if R₁ is a group composed of dicarboxylic acid and a diol, the weight ratio of a moiety -CH(CH₃)C(O)O-derived from lactic acid to a moiety of formula (1) is 99.9/0.1 to 90.1/9.9 and R₁ has a weight average molecular weight of less than 10,000; and
(ii) has a weight average molecular weight (Mw) of 5,000-500,000 as determined by gel permeation chromatography through the comparison with a polystyrene standard sample.

2. The compound of claim 1, wherein the moiety (1) is of the formula (2): 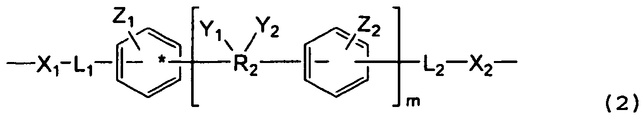 wherein
X₁ and X₂ each independently are O, S or NH;
R₂ is a single bond or a linear, branched or cyclic C₁₋₁₀-hydrocarbon group;
Y₁ and Y₂ independently are H, saturated C₁₋₁₀- hydrocarbon or C₆₋₁₀-aryl, and are not present if
R₂ is a single bond;
L₁ and L₂ independently are C₁₋₈-alkylene or C₁₋₈-oxyalkylene;
Z₁ and Z₂ independently are H or a C₁₋₁₀-hydrocarbon group;
Y₁ and Y₂, Y₁ and Z₁, and Y₂ and Z₂ may be mutually bonded to form a ring; and
m is an integer of 0-5.

3. The compound of claim 1, wherein the moiety (1) is of the formula (3) 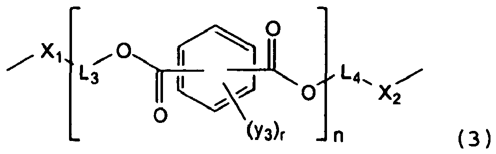 wherein
X₁ and X₂ independently are O, S or NH;
Y₃ is H, a saturated linear, branched or cyclic C₁₋₈-hydrocarbon group, C₆₋₈-aryl or C₇₋₈-aralkyl;
L₃ and L₄ independently are C₂₋₈-alkylene or C₃₋₈-cycloalkylene;
n is an integer of 1-100; and
r is an integer of 0-4.
and the weight ratio of the moiety -CH(CH₃)C(O)O-derived from lactic acid to the moiety of formula (3) is 99.7/0.3 to 90.5/9.5.

4. The compound of claim 1, wherein the moiety (1) is of the formula (4): 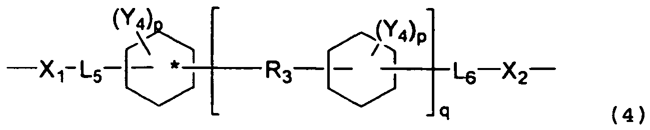 wherein
X₁ and X₂ independently are O, S or NH;
Y₄ is H or a linear, branched or cyclic C₁₋₈-hydrocarbon group;
R₃, L₅ and L₆ independently area single bond or C₁₋₈-alkylene;
p is an integer of 0-4; and
q is an integer of 0-5.

5. The compound of claim 1, wherein the moiety (1) is of the formula (5), wherein X₁ and X₂ independently are O, S or NH:

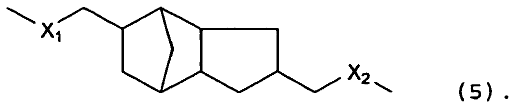

6. The compound of claim 1, wherein the moiety (1) is of the formula (6) wherein X₁ and X₂ independently are O, S or NH:

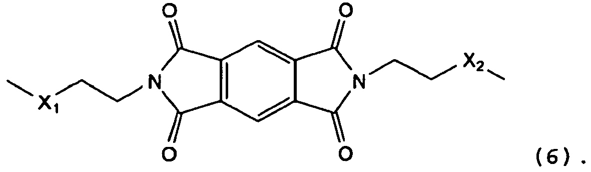

7. A polylactic acid resin composition, comprising a linear polylactic acid compound (A) as defined in any of claims 1-6.

8. The composition of claim 7, which further contains, per 100 parts by weight (pbw) of compound (A), 5-1,900 pbw of a polylactic acid compound (B), which
(i) has a moiety of formula (7)
-X₃-R₂-X₄- (7)
wherein
X₃, X₄ each independently are O, S or NH; and
R₂ is an aliphatic hydrocarbon group having a molecular weight of 50-50,000 and contains no ring structure, and the aliphatic hydrocarbon group may contain an O-, N- or S-atom; and
(ii) has a weight average molecular weight (Mw) of 5,000-500,000

9. The composition of claim 7 or 8, which further contains 5-500 pbw of a lactic acid resin (D) other than the linear polylactic acid compound (A) and the polylactic acid compound (B), preferably polylactic acid, based on 100 pbw of compound (A).

10. The composition of any of claims 7-9, which further contains 0.1-10 pbw of at least one transparent nucleating agent (C) selected from carboxylic acid amides, aliphatic alcohols and aliphatic carboxylic acid esters, preferably a carboxylic acid amide, based on 100 pbw of the total of compound (A) and, where present, compound (B) and compound (D).

11. The composition of any of claims 7-10, which has isothermal crystallization time is 5 minutes or less when melted at 220°C for 3 minutes and then cooled to 100°C at a cooling rate of 99°C/min and maintained at 100°C.

12. The composition of any of claims 7-10, wherein the moiety of formula (1) is a segment derived from at least one of aliphatic and aromatic ring-containing diols.

13. The composition according to claim 8, wherein the moiety of formula (7) is a segment derived from at least one of alkylene glycols, polyesters whose both terminals are hydroxyl groups and polycarbonates whose both terminals are hydroxyl groups.

14. The composition of claim 10, wherein the least one transparent nucleating agent (C) is at least one carboxylic acid amide selected from lauric acid amide, palmitic acid amide, stearic acid amide, erucic acid amide, behenic acid amide, ricinoleic acid amide, hydroxystearic acid amide, N-oleyl palmitic acid amide, N-stearyl erucic acid amide, ethylene biscapric acid amide, ethylene bislauric acid amide, ethylene bisstearic acid amide, ethylene bisoleic acid amide, ethylene bis-12-hydroxystearic acid amide, hexamethylene biscapric acid amide, hexamethylene bislauric acid amide, hexamethylene bisstearic acid amide, hexamethylene bisoleic acid amide, hexamethylene bis-12-hydroxystearic acid amide, m-xylylene biscapric acid amide, m-xylylene bislauric acid amide, m-xylylene bisstearic acid amide, m-xylylene bisoleic acid amide and m-xylylene bis-12-hydroxystearic acid amide.

15. A molded article, comprising the polylactic acid resin composition of any of claims 7-14, having a haze of 0.1 to 15% as measured at a thickness of 100 µm and having a crystallinity of 35% or more.

## Patentansprüche

1. Lineare Polymilchsäureverbindung (A), die
(i) einen Rest der Formel -X₁-R₁-X₂- (1) umfasst, worin
X₁, X₂ jeweils unabhängig 0, S oder NH darstellen; und
R₁ eine divalente Kohlenwasserstoffgruppe ist, die zumindest einen aromatischen oder aliphatischen Ring enthält, und die Kohlenwasserstoffgruppe ein O- oder N-Atom enthalten kann;
wenn R₁ eine aus Dicarboxylsäure und einem Diol zusammengesetzte Gruppe darstellt, das Gewichtsverhältnis eines aus Milchsäure abgeleiteten Restes -CH(CH₃)C(O)O- zu einem Rest der Formel (1) 99,9/0,1 bis 90,1/9,9 beträgt und R₁ ein gewichtsgemitteltes Molekulargewicht von weniger als 10.000 aufweist; und
(ii) ein gewichtsgemitteltes Molekulargewicht (Mw) von 5.000-500.000 aufweist, bestimmt durch Gelpermeationschromatografie durch Vergleich mit einer Polystyrolstandardprobe.

2. Verbindung gemäß Anspruch 1, worin der Rest (1) durch die Formel (2) dargestellt wird: 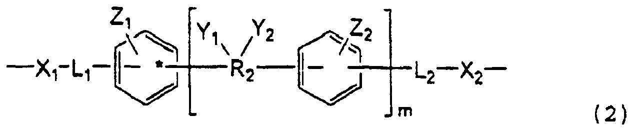 worin
X₁ und X₂ jeweils unabhängig 0, S oder NH darstellen;
R₂ eine Einfachbindung oder eine lineare, verzweigte oder zyklische C₁₋₁₀-Kohlenwasserstoffgruppe darstellt;
Y₁ und Y₂ unabhängig H, gesättigten C₁₋₁₀-Kohlenwasserstoff oder C₆₋₁₀-Aryl darstellen, und nicht vorhanden sind, wenn R² eine Einfachbindung darstellt;
L₁ und L₂ unabhängig C₁₋₈-Alkylen oder C₁₋₈-Oxyalkylen darstellen;
Z₁ und Z₂ unabhängig H oder eine C₁₋₁₀-Kohlenwasserstoffgruppe darstellen;
Y₁ und Y₂, Y₁ und Z₁, und Y₂ und Z₂ miteinander verbunden sein können, um einen Ring zu bilden; und
m eine ganze Zahl von 0-5 darstellt.

3. Verbindung gemäß Anspruch 1, worin der Rest (1) durch die Formel (3) dargestellt wird: 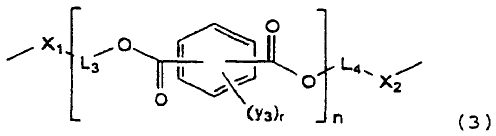 worin
X₁ und X₂ jeweils unabhängig 0, S oder NH darstellen;
Y₃ H, oder eine gesättigte lineare, verzweigte oder zyklische C₁₋₈-Kohlenwasserstoffgruppe, C₆₋₈-Aryl oder C₇₋₈-Aralkyl darstellt;
L₃ und L₄ unabhängig C₂₋₈-Alkylen oder C₃₋₈-Cycloalkylen darstellen;
n eine ganze Zahl von 1-100 darstellt; und
r eine ganze Zahl von 0-4 darstellt,
und das Gewichtsverhältnis des aus Milchsäure abgeleiteten Restes -CH(CH₃)C(O)O- zum Rest gemäß Formel (3) 99,7/0,3 bis 90,5/9,5 beträgt.

4. Verbindung gemäß Anspruch 1, worin der Rest (1) durch die Formel (4) dargestellt wird: 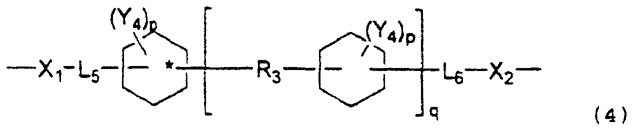 worin
X₁ und X₂ unabhängig 0, S oder NH darstellen;
Y₄ H, oder eine lineare, verzweigte oder zyklische C₁₋₈-Kohlenwasserstoffgruppe darstellt;
R₃, L₅ und L₆ unabhängig eine Einfachbindung oder C₁₋₈-Alkylen darstellen;
p eine ganze Zahl von 0-4 darstellt; und
q eine ganze Zahl von 0-5 darstellt.

5. Verbindung gemäß Anspruch 1, worin der Rest (1) durch die Formel (5) dargestellt wird, worin X₁ und X₂ unabhängig 0, S oder NH darstellen:

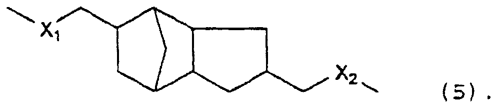

6. Verbindung gemäß Anspruch 1, worin der Rest (1) durch die Formel (6) dargestellt wird, worin X₁ und X₂ unabhängig 0, S oder NH darstellen:

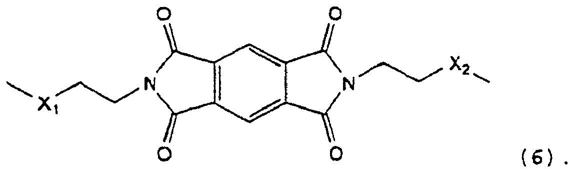

7. Polymilchsäure-Harzzusammensetzung, die eine lineare Polymilchsäureverbindung (A) wie in einem der Ansprüche 1 bis 6 definiert umfasst.

8. Zusammensetzung gemäß Anspruch 7, die ferner pro 100 Gew.-Teile (pbw) der Verbindung (A) 5-1.900 pbw einer Polymilchsäureverbindung (B) umfasst, die
(i) einen Rest der Formel (7) aufweist
-X₃-R₂-X₄- (7)
worin
X₃, X₄ jeweils unabhängig 0, S oder NH darstellen; und
R₂ eine aliphatische Kohlenwasserstoffgruppe, die ein Molekulargewicht von 50-50.000 aufweist und keine Ringstruktur enthält, darstellt, und die aliphatische Kohlenwasserstoffgruppe ein O-, N- oder S-Atom enthalten kann; und
(ii) ein gewichtsgemitteltes Molekulargewicht (Mw) von 5.000-500.000 aufweist.

9. Zusammensetzung gemäß Anspruch 7 oder 8, die ferner 5 bis 500 pbw eines Polymilchsäureharzes (D) enthält, das ein anderes ist als die lineare Polymilchsäureverbindung (A) und die Polymilchsäureverbindung (B), bevorzugt Polymilchsäure, bezogen auf 100 pbw der Verbindung (A).

10. Zusammensetzung gemäß einem der Ansprüche 7 bis 9, die ferner 0,1 bis 10 pbw von zumindest einem transparenten Zellenbildner (C) enthält, der ausgewählt ist aus Carbonsäureamiden, aliphatischen Alkoholen und aliphatischen Carbonsäureestern, bevorzugt einem Carbonsäureamid, bezogen auf 100 pbw der Gesamtheit der Verbindung (A) und, wo vorhanden, Verbindung (B) und Verbindung (D).

11. Zusammensetzung gemäß einem der Ansprüche 7 bis 10, die eine isothermale Kristallisationszeit von 5 Minuten oder weniger aufweist, wenn sie bei 220°C für 3 Minuten geschmolzen und dann auf 100°C mit einer Kühlrate von 99°C/Minute gekühlt und bei 100°C gehalten wird.

12. Zusammensetzung gemäß einem der Ansprüche 7 bis 10, worin der Rest gemäß Formel (1) ein Segment darstellt, das von zumindest einem aus aliphatischen und aromatischen Ring enthaltenden Diolen hergeleitet ist.

13. Zusammensetzung gemäß Anspruch 8, worin der Rest der Formel (7) ein Segment darstellt, das von zumindest einem aus Alkylenglycolen, Polyestern, deren beide Enden Hydroxylgruppen darstellen, und Polycarbonaten, deren beide Enden Hydroxylgruppen darstellen, hergeleitet ist.

14. Zusammensetzung gemäß Anspruch 10, worin der zumindest eine Zellenbildner (C) zumindest ein Carbonsäuremaid darstellt, das ausgewählt ist aus Laurinsäureamid, Palmitinsäureamid, Stearinsäuramid, Erucasäureamid, Behensäureamid, Rizinolsäureamid, Hydroxystearinsäureamid, N-Oleylpalmitinsäureamid, N-Stearylerucasäureamid, Ethylenbiscaprinsäureamid, Ethylenbislaurinsäureamid, Ethylenbisstearinsäureamid, Ethylenbisoleinsäureamid, Ethylenbis-12-hydroxystearinsäureamid, Hexamethylenbiscaprinsäureamid, Hexamethylenbislaurinsäureamid, Hexamethylenbisstearinsäureamid, Hexamethylenbisölsäureamid, Hexamethylenbis-12-hydroxystearinsäureamid, m-Xylylenbiscaprinsäureamid, m-Xylylenbislaurinsäureamid, m-Xylylenbisstearinsäureamid, m-Xylylenbisölsäureamid und m-Xylylenbis-12-hydroxystearinsäureamid.

15. Formkörper, der die Polymilchsäure-Harzzusammensetzung gemäß einem der Ansprüche 7 bis 14 umfasst, der eine Trübung von 0,1 bis 15 % aufweist, gemessen bei einer Dicke von 100 *µ*m, und der eine Kristallinität von 35 % oder mehr aufweist.

## Revendications

1. Composé de poly(acide lactique) linéaire (A), qui
(i) comprend un groupe caractéristique de la formule
-X₁-R₁-X₂- (1),
dans laquelle
X₁, X₂ sont chacun indépendamment O, S ou NH ; et
R₁ est un groupe hydrocarbure divalent contenant au moins un cycle aromatique ou aliphatique, et le groupe hydrocarbure peut contenir un atome de O ou de N ;
si R₁ est un groupe composé d'un acide carboxylique et d'un diol, le rapport en poids d'un groupe caractéristique -CH(CH₃)C(O)O- dérivé d'un acide lactique sur un groupe caractéristique de formule (1) est 99,9/0,1 à 90,1/9,9 et R₁ a un poids moléculaire moyen en poids de moins de 10 000 ; et
(ii) a un poids moléculaire moyen en poids (Mw) de 5 000 à 500 000 tel que déterminé par chromatographie par perméation de gel par comparaison avec un échantillon standard de polystyrène.

2. Composé selon la revendication 1, dans lequel le groupe caractéristique (1) est de la formule (2) : 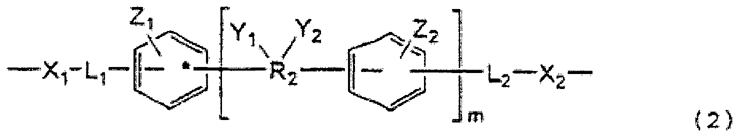 dans laquelle
X₁ et X₂ sont chacun indépendamment O, S ou NH ;
R₂ est une liaison simple ou un groupe hydrocarbure en C₁-C₁₀ linéaire, ramifié ou cyclique ;
Y₁ et Y₂ sont indépendamment H, un hydrocarbure en C₁-C₁₀ saturé ou un aryle en C₆-C₁₀, et ne sont pas présents si R₂ est une liaison simple ;
L₁ et L₂ sont indépendamment un alkylène en C₁-C₈ ou un oxyalkylène en C₁-C₈ ;
Z₁ et Z₂ sont indépendamment H ou un groupe hydrocarbure en C₁-C₁₀ ;
Y₁ et Y₂, Y₁ et Z₁, et Y₂ et Z₂ peuvent être mutuellement liés pour former un cycle ; et
m est un entier de 0 à 5.

3. Composé selon la revendication 1, dans lequel le groupe caractéristique (1) est de la formule (3) : 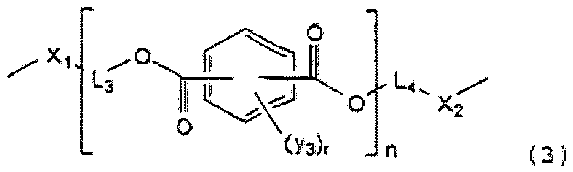 dans laquelle
X₁ et X₂ sont indépendamment O, S ou NH ;
Y₃ est H, un groupe hydrocarbure en C₁-C₈ linéaire, ramifié ou cyclique saturé, un aryle en C₆-C₈ ou un aralkyle en C₇-C₈ ;
L₃ et L₄ sont indépendamment un alkylène en C₂-C₈ ou un cycloalkylène en C₃-C₈ ;
n est un entier de 1 à 100 ; et
r est un entier de 0 à 4,
et le rapport en poids du groupe caractéristique -CH(CH₃)C(O)O- dérivé d'un acide lactique sur le groupe caractéristique de formule (3) est 99,7/0,3 à 90,5/9,5.

4. Composé selon la revendication 1, dans lequel le groupe caractéristique (1) est de la formule (4) : 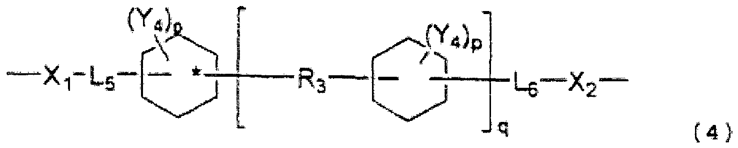 dans laquelle
X₁ et X₂ sont indépendamment O, S ou NH ;
Y₄ est H ou un groupe hydrocarbure en C₁-C₈ linéaire, ramifié ou cyclique ;
R₃, L₅ et L₆ sont indépendamment une liaison simple ou un alkylène en C₁-C₈ ;
p est un entier de 0 à 4 ; et
q est un entier de 0 à 5.

5. Composé selon la revendication 1, dans lequel le groupe caractéristique (1) est de la formule (5), dans laquelle X₁ et X₂ sont indépendamment O, S ou NH :

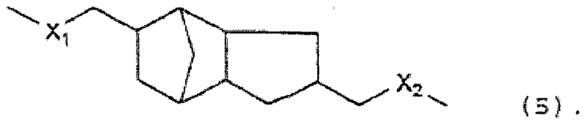

6. Composé selon la revendication 1, dans lequel le groupe caractéristique (1) est de la formule (6), dans laquelle X₁ et X₂ sont indépendamment O, S ou NH :

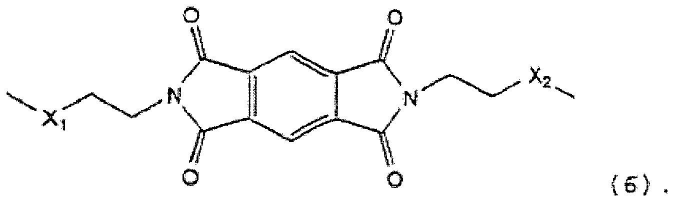

7. Composition de résine de poly(acide lactique), comprenant un composé de poly(acide lactique) linéaire (A) selon l'une quelconque des revendications 1 à 6.

8. Composition selon la revendication 7, qui contient en outre, pour 100 parties en poids (pep) de composé (A), 5 à 1 900 pep d'un composé de poly(acide lactique) (B), qui
(i) a un groupe caractéristique de formule (7)
-X₃-R₂-X₄- (7)
dans laquelle
X₃, X₄ sont chacun indépendamment O, S ou NH ; et
R₂ est un groupe hydrocarbure aliphatique ayant un poids moléculaire de 50 à 50 000 et ne contient pas de structure cyclique, et le groupe hydrocarbure aliphatique peut contenir un atome de O, de N ou de S ; et
(ii) a un poids moléculaire moyen en poids (Mw) de 5 000 à 500 000.

9. Composition selon la revendication 7 ou 8, qui contient en outre 5 à 500 pep d'une résine d'acide lactique (D) autre que le composé de poly(acide lactique) linéaire (A) et le composé de poly(acide lactique) (B), préférablement un poly(acide lactique), sur la base de 100 pep de composé (A).

10. Composition selon l'une quelconque des revendications 7 à 9, qui contient en outre 0,1 à 10 pep d'au moins un agent de nucléation transparent (C) choisi parmi des amides d'acide carboxylique, des alcools aliphatiques et des esters d'acide carboxylique aliphatique, préférablement un amide d'acide carboxylique, sur la base de 100 pep du total de composé (A) et, lorsqu'ils sont présents du composé (B) et du composé (D).

11. Composition selon l'une quelconque des revendications 7 à 10, qui a un temps de cristallisation isotherme de 5 minutes ou moins lorsqu'elle est fondue à 220°C pendant 3 minutes et ensuite refroidie à 100°C à une vitesse de refroidissement de 99°C/min et maintenue à 100°C.

12. Composition selon l'une quelconque des revendications 7 à 10, dans laquelle le groupe caractéristique de formule (1) est un segment dérivé d'au moins un parmi des diols contenant des cycles aliphatiques et aromatiques.

13. Composition selon la revendication 8, dans laquelle le groupe caractéristique de formule (7) est un segment dérivé d'au moins un parmi des alkylène glycols, des polyesters dont les deux terminaisons sont des groupes hydroxyle et des polycarbonates dont les deux terminaisons sont des groupes hydroxyle.

14. Composition selon la revendication 10, dans laquelle l'au moins un agent de nucléation transparent (C) est au moins un amide d'acide carboxylique choisi parmi un amide d'acide laurique, un amide d'acide palmitique, un amide d'acide stéarique, un amide d'acide érucique, un amide d'acide béhénique, un amide d'acide ricinoléique, un amide d'acide hydroxystéarique, un amide d'acide N-oléylpalmitique, un amide d'acide N-stéarylérucique, un amide d'acide éthylènebiscaprique, un amide d'acide éthylènebislaurique, un amide d'acide éthylènebisstéarique, un amide d'acide éthylènebisoléique, un amide d'acide éthylènebis-12-hydroxystéarique, un amide d'acide hexaméthylènebiscaprique, un amide d'acide hexaméthylènebislaurique, un amide d'acide hexaméthylènebisstéarique, un amide d'acide hexaméthylènebisoléique, un amide d'acide hexaméthylènebis-12-hydroxystéarique, un amide d'acide m-xylylènebiscaprique, un amide d'acide m-xylylènebislaurique, un amide d'acide m-xylylènebisstéarique, un amide d'acide m-xylylènebisoléique et un amide d'acide m-xylylènebis-12-hydroxystéarique.

15. Article moulé, comprenant la composition de résine de poly(acide lactique) selon l'une quelconque des revendications 7 à 14, ayant un trouble de 0,1 à 15% tel que mesuré à une épaisseur de 100 *µ*m et ayant une cristallinité de 35% ou plus.
